# EUROPEAN PATENT APPLICATION

(11) **EP 0 841 030 A1**
(43) Date of publication of application: **13.05.1998**
(21) Application number: 97308995.6
(22) Date of filing: 10.11.1997
(51) Int. Cl.: A47J 27/21

(54) **Liquid heating vessel**

(30) Priority: 08.11.1996 GB 9623421
(71) Applicant: STRIX LIMITED, Ronaldsway, Isle of Man IM9 2RG (GB)
(72) Inventor: Taylor, John Crawshaw, Castletown, Isle of Man, IM9 1HA (GB)
(74) Representative: Leckey, David Herbert

(57) **Abstract**

A liquid heating vessel (2) comprising a metal vessel body (4), a heating element (14) provided on the underside of a metal plate (10) which closes the bottom of the vessel, the vessel and the plate having respective sealing flanges (34,18), with sealing means (13) arranged between the sealing flanges, the vessel being provided with a plurality of tongues (30) extending from the vessel sealing flange, which tongues clamp the heater plate to the vessel and compress the sealing means between the sealing flanges.

## Description

The present invention relates to liquid heating vessels and in particular to portable liquid heating vessels having metal bodies, such as metal kettles and 'wasserkochers'.

Traditionally, metal kettles have been heated using sheathed heating elements mounted in an opening in the body of the vessel and extending into the vessel. Such arrangements have the advantage that the element may easily be mounted in the vessel, and also easily removed for replacement if it is found to be faulty either during manufacture or subsequent use.

However, such elements have the disadvantage that they may become unsightly during use, particularly in hard water areas, and that they make cleaning of the inside of the vessel more difficult.

Accordingly, it is now becoming more common to heat such vessel by means of a heating element provided on the underside of the vessel base. This has the advantage that the inside of the vessel can more easily be cleaned.

Typically a heating element is brazed or otherwise fixedly mechanically connected to the vessel base. In some arrangements the element is mounted to a plate which is itself mounted as the base of the vessel body, for example by being rolled over a flange provided on the vessel body. The problem with such arrangements, however, is that the element is normally attached to the vessel base quite early in its construction, before the vessel body is polished, before controls etc. are mounted to the vessel and before final testing. If the element is found to be faulty at this final testing stage, then it cannot be removed from the vessel base, and the whole vessel must be scrapped. Clearly this is extremely expensive. Furthermore, if the element should fail in the field, there is no way in which it can be removed and replaced, and a potentially expensive purchase must be replaced.

The present invention seeks to mitigate the above problems, and from a first aspect comprises a liquid heating vessel comprising a metal vessel body, a heating element provided on the underside of a metal plate which closes the bottom of the vessel, the vessel and the plate having respective sealing flanges, with sealing means arranged between the sealing flanges, the vessel being provided with a plurality of tongues extending from the vessel sealing flange, which tongues clamp the heater plate to the vessel and compress the sealing means between the sealing flanges.

Thus in accordance with the invention, a heater plate is clamped in the base of a liquid heating vessel by means of a plurality of spaced clamping tongues associated with a sealing flange on the vessel. Not only does this provide an extremely satisfactory way in which to mount the heater plate in the first instance, but it means that, if necessary, it may be removed by deforming back the clamping tongues. A new plate may then be positioned and clamped using the tongues, thereby saving the cost of having potentially to replace the whole vessel.

The metal plate may be, for example, a stainless steel plate. The plate may have been treated or coated on its vessel facing side to improve its appearance or corrosion resistance.

The seal may be arranged so to be compressed radially or axially of the vessel, or in a combination of these directions.

In one embodiment, the plate may comprise a peripheral L-shaped or U-shaped flange for receiving the a seal. The seal may have a diameter which is slightly smaller than the outer diameter of the plate flange on which it is received. One of the flanges, most preferably that of the vessel base may be inclined, so as to compress the seal in two directions upon fastening of the plate to the base. Alternatively, the sealing flange provided on the vessel has the shape of an inverted L.

The plate may have a number of slots to receive the clamping tongues of the vessel, and which also serve to locate the plate relative to the vessel.

The vessel sealing flange is preferably formed on a portion of the vessel base spaced radially inwardly of the bottom of the vessel wall.

The region of the vessel base on which the vessel sealing flange is formed may be an integrally formed part of the vessel, or a separate component, e.g. a mounting ring, which is itself fixedly mounted to the vessel, for example by welding. This may facilitate manufacture of the vessel as a whole.

The heating element may be a conventional sheathed coil element, but preferably it is a thick film heating element.

Some preferred embodiments of the invention will now be described, by way of example only, with reference to the accompanying drawings, in which:
Figure 1 shows the base of a liquid heating vessel assembled in accordance with the invention;
Figure 2 shows a detail of Figure 1;
Figure 3 shows a view of a component of the vessel of Figure 1; and
Figure 4 shows a modification of the invention.

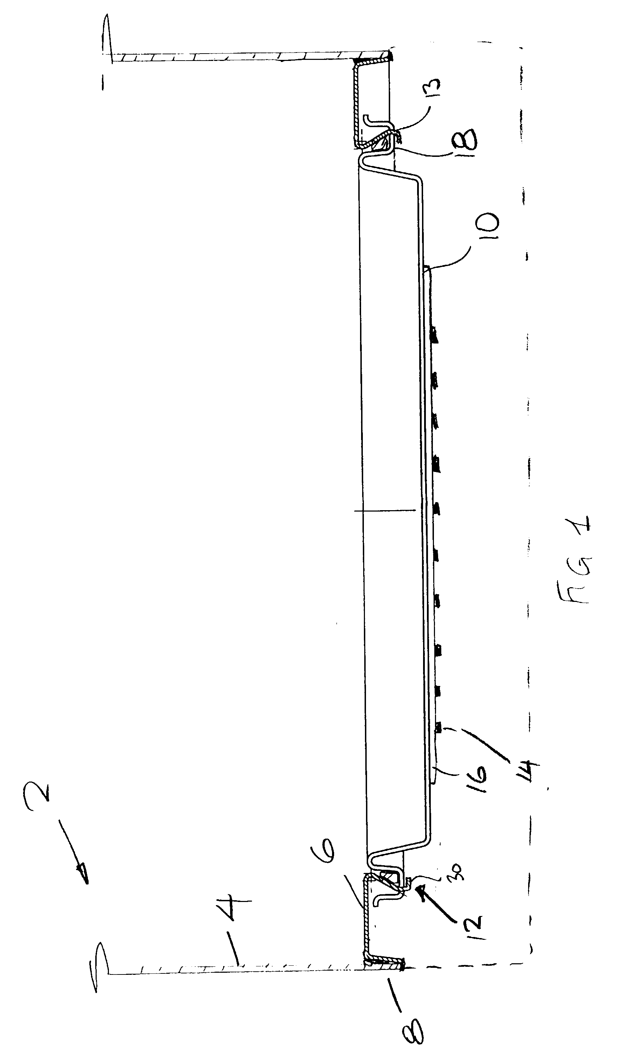

Referring to Figure 1, a liquid heating vessel 2 comprises a stainless steel vessel body wall 4, a stainless steel mounting ring 6 fixedly secured to the bottom 8 of the vessel wall, for example by welding, and a stainless steel element carrier plate 10 releasably fastened to the mounting ring 6 through releasable fastening means indicated generally by 12. A seal 13 is compressed between the carrier plate 10 and the mounting ring 6. The element carrier plate 10 is covered by a base cover 15, shown schematically in dotted lines.

In this embodiment, the plate 10 carries a thick film printed element 14 which is laid down onto an ceramic insulating layer 16 provided on the underside of the plate 10. Such elements are well known and will not be described further.

The carrier plate 10 is of a type similar to that described in WO 96/18331, and comprises a peripheral U-shaped groove 18, having an inner wall 20, an outer wall 22 and a base wall 24. A series of six circumferentially equispaced slots 26 is formed in the outer and base walls 22,24 of the groove 18, the slots being of sufficient circumferential width to accommodate fastening tongues 30 provided on the mounting ring 6 as will be described further below.

The mounting ring 6 comprises a radially outer flange 32 for engagement with and attachment to the vessel wall 4, and a radially inner flange 34 for mounting the element carrier plate 10. The flanges are joined by a web 36. The innermost diameter D_{I} of the flange 34 is slightly larger than the diameter Do of the inner wall 20 of the peripheral groove 18 of the carrier plate. The flange 34 is inclined radially outwardly away from the web 36, to define an included angle of about 60° therebetween. Six circumferentially equispaced fastening tongues 30 extend from the lower end 38 of the flange 34 for engagement with the slots 26 in the groove 18 of the carrier plate 10. The tongues 30 and the slots 26 together constitute the releasable fastening means 12, as will be described further below.

Assembly of the vessel will now be described. Firstly, the mounting ring 6 is attached to the vessel wall 4 by suitable means, such as welding. The seal 13 is then pushed into the groove 18 of the carrier plate 10. The seal 13 is preferably an O ring seal, having a diameter slightly smaller than that of the groove inner diameter D_{O}, so that it will be stretched and will stay in position on the inner wall 20 of the groove 18.

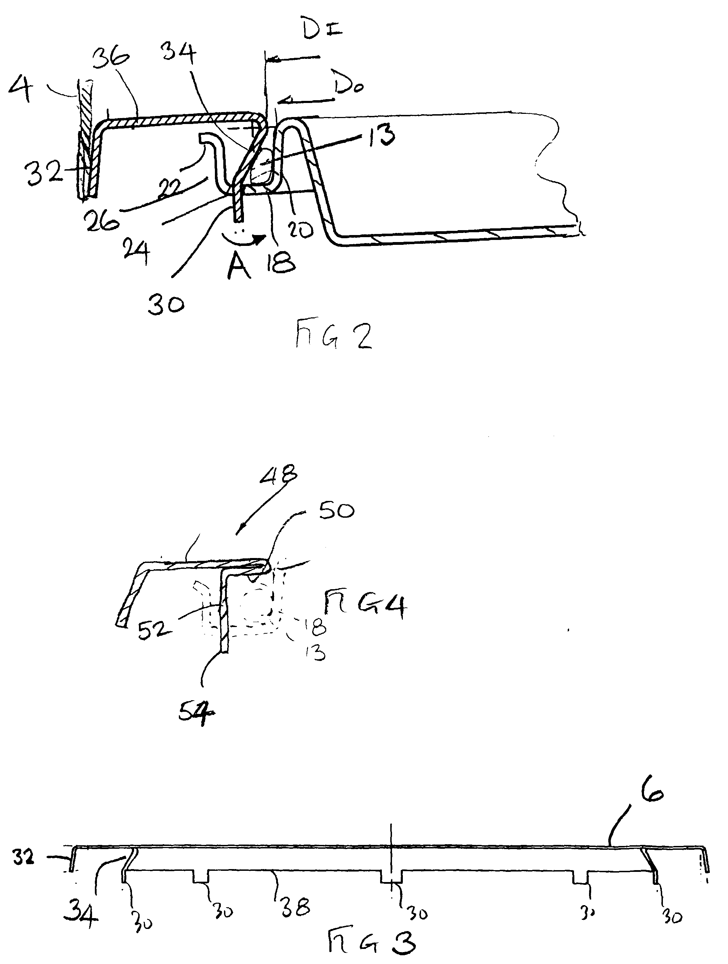

The carrier plate 10 is then brought together with the mounting ring 6, as shown in Figure 2, with the tongues 30 of the ring 6 extending through and beyond the slots 26 in the groove 18. The seal 13 is sandwiched between the inclined flange 34 of the mounting ring 6 and the inner and base walls 20,24 of the groove 18 of the carrier plate 10.

To fasten the carrier plate 10 to the mounting ring 6, the tongues 30 are bent over in the direction of arrow A thereby fastening the carrier plate 10 firmly in position and fully compressing the seal 13.

The vessel 2 may then be polished, and have other operations performed on it, and if it is found necessary to replace the element at any subsequent time, the carrier plate 10 may easily be removed simply by bending back the tongues 30 and disengaging the carrier plate 10 therefrom. The tongues 30 are easily accessible from under the vessel base making this a very straightforward operation. A replacement element may then be fitted in the manner described above.

From the above, it will be seen that the invention provides in its preferred embodiments a metallic liquid heating vessel having an electric heating element provided on the underside of a base part of the vessel, the base part being releasably fastened to the vessel. The base part can be easily removed and a replacement fitted to avoid the need for replacing the whole vessel.

Whilst the invention has been described by the above embodiment, this is not limiting, and modifications to the embodiment within the scope of the invention will be readily apparent to the skilled person. For example, whilst a thick film printed element 14 has been described, the element may be of any type, for example a conventional sheathed element bonded, brazed, crimped or pressed onto the carrier, possibly through a thermal diffuser plate.

Also, it is not essential that the flange 34 of the mounting ring 6 is inclined, as shown. Figure 4 shows an alternative flange formation in which the inner edge of the ring is folded back on itself to form a flange 48 having a double thickness portion 50 and a generally vertical portion 52 on the end of which are formed the fastening tongues 54. In this embodiment the seal 13 will be trapped substantially between the double thickness portion 50 of the flange and the base wall 24 of the groove 18.

Also, the carrier plate 10 need not be mounted to a separate mounting ring 6, but could be mounted directly to a part of the base of a vessel or to the bottom of a wall of the vessel, if the base or the vessel wall were suitably formed.

It will also be appreciated that the preferred plate described above may also be used in applications for fitting to plastic vessels, as described in W096/18331, since the slots formed in the peripheral groove are formed outwardly of the sealing surfaces of the groove.

## Claims

1. A liquid heating vessel (20) comprising a metal vessel body (4), a heating element (14) provided on the underside of a metal plate (10) which closes the bottom of the vessel, the vessel and the plate having respective sealing flanges (34,18), with sealing means (13) arranged between the sealing flanges, the vessel being provided with a plurality of tongues (30) extending from the vessel sealing flange (34), which tongues clamp the heater plate to the vessel and compress the sealing means between the sealing flanges.

2. A liquid heating vessel as claimed in claim 1 wherein the plate (10) comprises a peripheral L-shaped or U-shaped flange (18) for receiving a seal (13).

3. A liquid heating vessel as claimed in claim 2 wherein said seal (13) has a diameter which is slightly smaller than the outer diameter (D_{O}) of the plate flange (20) on which it is received.

4. A liquid heating vessel as claimed in claim 1, 2 or 3 wherein a said sealing flange (34,18) is inclined, so as to compress the sealing means (13) in two directions.

5. A liquid heating vessel as claimed in claims 2 or 3 and 4, wherein the sealing flange (34) provided on the vessel is inclined, and is arranged to enter the L-shaped or U-shaped flange (18) of the plate (10) so as to compress the seal (13) against the inner (20) and base (24) walls thereof.

6. A liquid heating vessel as claimed in claim 1, 2 or 3, wherein the sealing flange (34) provided on the vessel has the shape of an inverted L (48).

7. A liquid heating vessel as claimed in any preceding claim wherein the plate (10) has a number of slots (26) to receive the clamping tongues (30) of the vessel.

8. A liquid heating vessel as claimed in any preceding claim wherein the vessel sealing flange (34) is formed on a portion of the base of the vessel inwardly spaced from the wall of the vessel (4).

9. A liquid heating vessel as claimed in any preceding claim wherein the vessel sealing flange (34) is formed on a mounting ring (36) which is fixedly secured to the vessel.

10. A liquid heating vessel as claimed in any preceding claim, wherein said heating element (14) is a thick film heating element.

11. A heating element for a liquid heating vessel comprising a metal plate (10) with a heating element (14) provided on its lower surface, the plate having a peripheral L-shaped or U-shaped flange (18) for receiving a seal (13), and the bottom surface (24) of said flange being slotted (26) for receiving a plurality of clamping tongues (30) of the vessel.
